Europäisches Patentamt

European Patent Office

Office européen des brevets

(19)

(11) EP 1 536 577 A1

## (12) EUROPEAN PATENT APPLICATION
published in accordance with Art. 158(3) EPC

(43) Date of publication:
01.06.2005 Bulletin 2005/22

(21) Application number: 03741494.3

(22) Date of filing: 18.07.2003

(51) Int Cl.7: H04B 10/04

(86) International application number:
PCT/JP2003/009171

(87) International publication number:
WO 2004/010611 (29.01.2004 Gazette 2004/05)

(84) Designated Contracting States:
AT BE BG CH CY CZ DE DK EE ES FI FR GB GR
HU IE IT LI LU MC NL PT RO SE SI SK TR

(30) Priority: 19.07.2002 JP 2002211364

(71) Applicant: MATSUSHITA ELECTRIC INDUSTRIAL
CO., LTD.
Kadoma-shi, Osaka 571-8501 (JP)

(72) Inventors:
• NAGAI, Tetsuya
Yokohama-shi, Kanagawa 220-0006 (JP)
• ASANO, Hiroaki
Yokohama-shi, Kanagawa 226-0002 (JP)

(74) Representative: Casalonga, Axel
Bureau D.A. Casalonga - Josse,
Paul-Heyse-Strasse 33
80336 München (DE)

(54) BURST SIGNAL EXTINCTION RATIO CONTROL CIRCUIT, INTEGRATED CIRCUIT THEREOF, BURST SIGNAL EXTINCTION RATIO CONTROL METHOD, COMPUTER PROGRAM, AND LASER DIODE DRIVE CIRCUIT

(57)    A circuit construction for maintaining a constant extinction ratio of a laser diode for converting a high-speed burst signal to an optical signal is disclosed. In this construction, control is made so that a difference between average optical power of burst #1 wherein a modulation current Im is set to a regular value and average optical power of burst #2 wherein a modulation current is slightly increased becomes equal to a reference value, and further control is made so that average optical power of burst #3 wherein the modulation current Im is set to the regular value is equal to a reference value.

FIG. 1

EP 1 536 577 A1

**Description**

TECHNICAL FIELD

The present invention relates to a burst signal extinction ratio control circuit for controlling an extinction ratio of a laser diode used in optical transmission of digital data in packet communications and an integrated circuit thereof, a burst signal extinction ratio control method, a computer program, and a laser diode drive circuit.

BACKGROUND ART

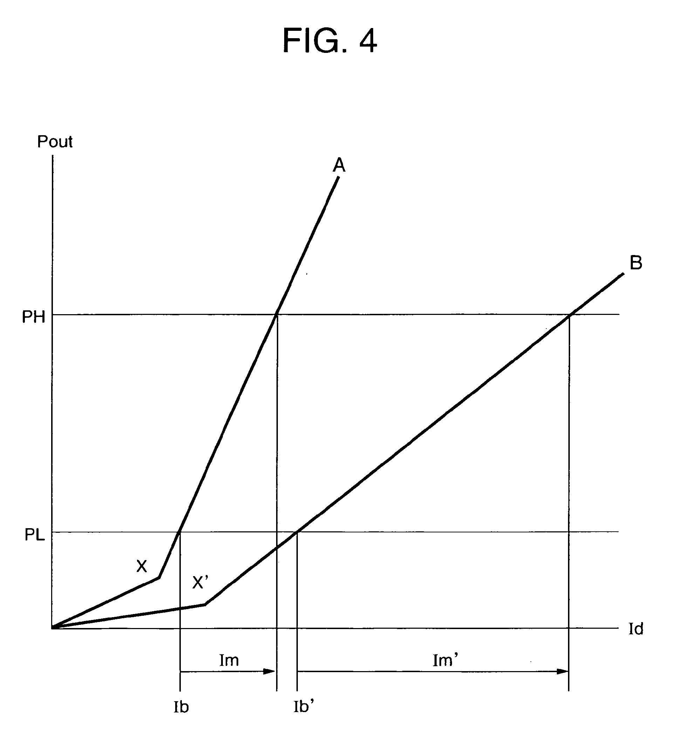

FIG. 4 shows typical characteristics of a laser diode used for performing optical transmission of digital data in packet communications. A horizontal axis represents a current Id flowing through the laser diode, and a vertical axis represents optical output power Pout from the laser diode. Line A represents characteristics at a given temperature. When Id is gradually increased from 0, initially the optical output power Pout is hardly increased. However, the optical power Pout starts increased relatively linearly from the point (point X) on which the threshold current value is surpassed. For conversion a digital electrical signal to an optical signal, this linear region is used. Therefore, when "L" is transmitted, a bias current Ib is applied; and when "H" is transmitted, a modulation current Im is applied in addition thereto. Thereby, the optical output power becomes PL in the case of "L", and becomes PH in the case of "H."

Here, an extinction ratio is defined as PH/PL. Further, when a mark ratio of a digital signal (a ratio of "1" among a plurality of bits) is 0.5, average output power (also referred to as average optical power) is expressed by (PH+PL)/2.

However, when characteristics become line B due to temperature changes and changes over time, the bias current Ib and the modulation current Im needs to be changed to Ib' and Im' as shown in the figure in order to equally maintain the extinction ratio and the average optical power. Control circuits for controlling the constant extinction ratio and the constant average optical power as above have been already suggested.

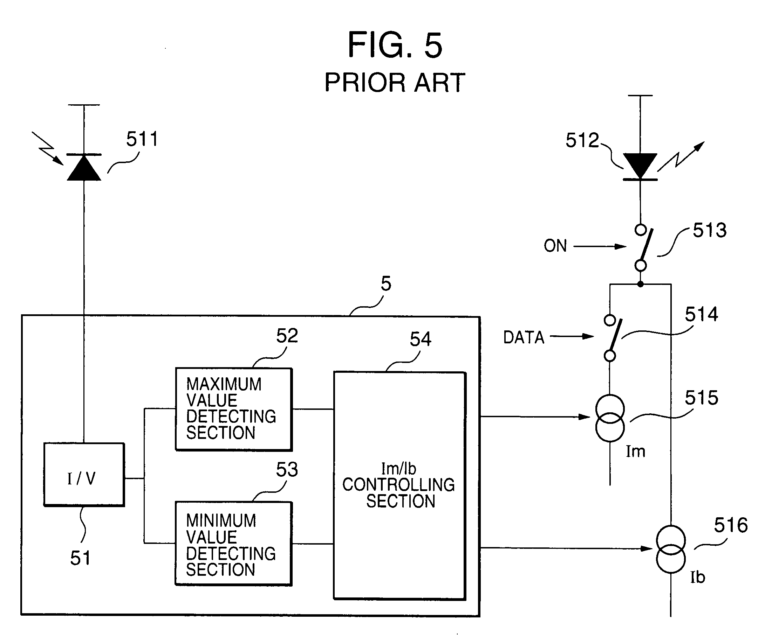

FIG. 5 shows a first construction example of a conventional control circuit shown in Japanese Unexamined Patent Application Publication No. H03-209890 and the like. In FIG. 5, in addition to a control circuit 5, a laser diode 512, a modulation current source 515, a bias current source 516, and a monitor photodiode 511 for converting section of light of the laser diode 512 to an electrical signal are shown. During burst output, a switch 513 becomes connected and a bias current Ib is always applied to the laser diode 512. During the burst, in the case that data is "L," only the current Ib is applied to the laser diode 512; meanwhile, in the case that data is "H," a switch 514 becomes connected, and currents Ib and Im are applied to the laser diode 512. In reality, pre-bias operation to make the switch 513 connected slightly before starting burst is often performed. However, since this pre-bias operation is not directly related to the invention, explanation thereof is omitted.

When an optical burst signal is sent from the laser diode 512, part thereof is converted to a current by the monitor photodiode 511. This current signal is converted to a voltage signal by a current-voltage converting section (I/V) 51. A maximum value detecting section 52 and a minimum value detecting section 53 respectively detect the maximum value and the minimum value of the voltage signal. An Im/Ib controlling section 54 obtains the modulation current Im and the bias current Ib so that these values correspond with PH and PL in FIG. 4, and sets these values in the modulation current source 515 and the bias current source 516. As above, control has been made so that the extinction ratio becomes constant.

FIG. 6 shows a second construction example of a conventional control circuit shown in Japanese Patent No. 2932100 and the like. In FIG. 6, in addition to a control circuit 6, a laser diode 612, a pilot current source 614, a modulation current source 615, a bias current source 616, and a monitor photodiode 611 for converting section of light of the laser diode 612 to an electrical signal are shown. In the case that data is "L," a switch 613 is opened, and currents Ib and Ip are applied to the laser diode 612. In the case that data is "H, " the switch 613 becomes connected, and currents Ib, Im, and Ip are applied to the laser diode 612.

A sine wave signal is output from a pilot oscillator 64. As a frequency thereof, a value sufficiently lower than a frequency band of the data is selected. According to the sine wave signal, the pilot current source 614 applies the sine wave current Ip. An amplitude thereof shall be smaller than of the modulation current Im.

When an optical signal is sent from the laser diode 612, part thereof is converted to a current by the monitor photodiode 611. A current signal thereof is converted to a voltage signal by a current-voltage converting section 61. This electrical signal includes a frequency element of the data and a pilot signal. A low-pass filter 62 extracts only the pilot signal therefrom. A controlling section 63 decides the modulation current Im and the bias current Ib so that an amplitude of this pilot signal becomes constant. The controlling section 63 has a role for maintaining constant average optical power of the laser diode 612. Therefore, the electrical signal before passing the low-pass filter 62 is also input. When the amplitude of the pilot signal and the average optical power are constant, the constant extinction ratio can be maintained.

However, in the foregoing conventional first control circuit, when a data transmission rate becomes fast, high speed operation is required for the monitor photodiode 511, the current-voltage converting section 51, the maximum value detecting section 52, and the minimum value detecting section 53 as well. That is, a bandwidth capable of correctly tracing an optical wave shape generated from the laser diode 512 is required. This leads to a problem that an optical module on which the monitor photodiode and the laser diode are mounted and a control circuit become complicated and their costs become high.

Further, in the foregoing conventional second control circuit, only the low frequency pilot signal and the average optical power are dealt. Therefore, high speed characteristics of the circuit are not required. However, transmission data is premised on being continuous. Therefore, there is a problem that the extinction ratio cannot be controlled for the burst signal wherein the signal is intermittent. Further, there is a problem that the pilot signal becomes noise to the data signal, which lowers the transmission quality.

DISCLOSURE OF THE INVENTION

It is an object of the invention to provide an excellent control circuit capable of resolving the foregoing conventional problems, and controlling a constant extinction ratio in relation to a high speed burst signal.

In order to resolve the foregoing problems, in the invention, a function for only slightly increasing a modulation current in units of burst is provided. Control is made so that a difference between average optical power in the case of a regular modulation current and average optical power in the case of increasing the modulation current corresponds with a reference value. Further, control is made so that average optical power in the case of the regular modulation current corresponds with a reference value.

That is, according to the invention, a burst signal extinction ratio control circuit for supplying a control signal to a driving section for performing driving by supplying a laser diode with a bias current and a modulation current, comprising:

> a measurement means for measuring average optical power for each burst of the laser diode;
> a modulation current control means for controlling a modulation current Im of the laser diode based on the average optical power measured by the measurement means; and
> a bias current control means for controlling a bias current Ib of the laser diode based on the average optical power measured by the measurement means is provided.

According to this construction, the constant extinction ratio can be obtained in relation to the high - speed burst signal at a small cost, and the transmission quality is not degraded.

Further, according to the invention, a burst signal extinction ratio control method for supplying a control signal to a driving section for performing driving by supplying a laser diode with a bias current and a modulation current, comprising:

> a measurement step for measuring average optical power for each burst of the laser diode;
> a modulation current control step for controlling a modulation current Im of the laser diode based on the average optical power measured by the measurement step; and
> a bias current control step for controlling a bias current Ib of the laser diode based on the average optical power measured by the measurement step is provided.

According to this construction, the constant extinction ratio can be obtained in relation to the high-speed burst signal, and the transmission quality is not degraded.

Further, according to the invention, a computer program for making a computer execute a burst signal extinction ratio control method for supplying a control signal to a driving section for performing driving by supplying a laser diode with a bias current and a modulation current, comprising:

> a measurement step for measuring average optical power for each burst of the laser diode;
> a modulation current control step for controlling a modulation current Im of the laser diode based on the average optical power measured by the measurement step; and
> a bias current control step for controlling a bias current Ib of the laser diode based on the average optical power measured by the measurement step is provided.

According to this construction, the constant extinction ratio can be obtained in relation to the high-speed burst signal by signal processing by a software, and the transmission quality is not degraded.

Further, according to the invention, a laser diode drive circuit, comprising:

> a bias current source for supplying a laser diode with a bias current;
> a modulation current source for supplying the laser diode with a modulation current;
> a measurement means for measuring average optical power for each burst of the laser diode;
> a modulation current control means for controlling a modulation current Im of the laser diode based on the average optical power measured by the measurement means; and
> a bias current control means for controlling a bias current Ib of the laser diode based on the average optical power measured by the measurement means, wherein
> the average optical power and an extinction ratio of the laser diode become constant is provided.

According to this construction, the constant extinction ratio can be obtained in relation to the high-speed burst signal at a small cost, and the transmission quality is not degraded.

In the invention, the modulation current is slightly changed in units of burst, and the constant extinction ratio is maintained by a variation of the optical output power thereby changed. The method wherein an alternate current is superimposed on a modulation current is equal to adding noise to a signal, leading to degradation of the transmission quality. Meanwhile, in the invention, direct currents are sort of superimposed, and therefore the transmission quality is not degarded. Further, signal amplitude is slightly changed for each burst in the invention. However, a receiver for burst generally performs gain control for each burst. Therefore, such slightly change of signal amplitude does not cause problems.

BRIEF DESCRIPTION OF THE DRAWINGS

FIG. 1 is a block diagram showing an embodiment of a control circuit of the invention;
FIG. 2 is a flowchart showing a process flow in an embodiment for realizing the control circuit of the invention by a software;
FIG. 3 is a graph showing characteristics of current Id versus optical output power Pout of a laser diode;
FIG. 4 is a graph showing typical characteristics of the laser diode;
FIG. 5 is a block diagram showing a first construction example of a conventional control circuit; and

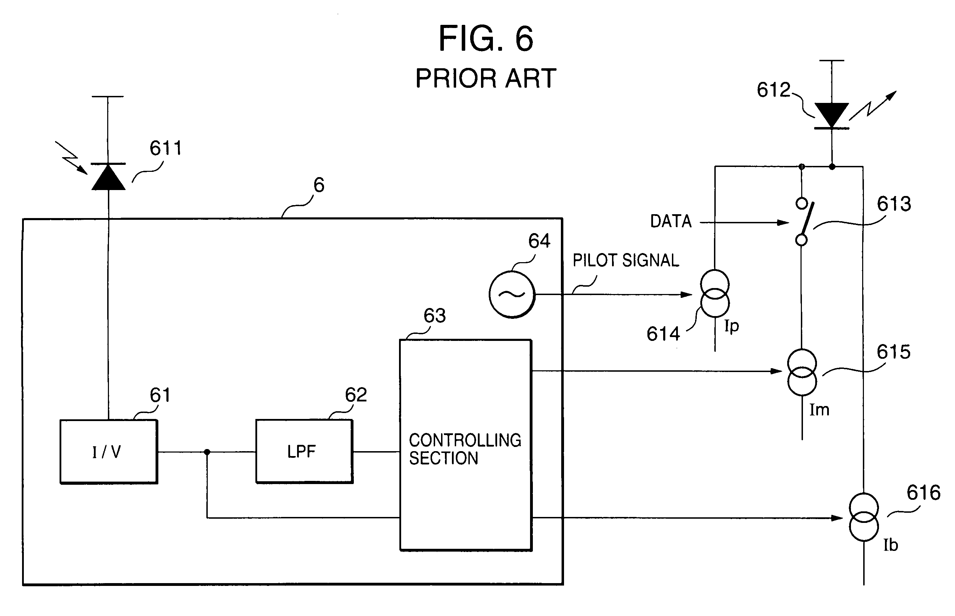

FIG. 6 is a block diagram showing a second construction example of a conventional control circuit.

BEST MODE FOR CARRYING OUT THE INVENTION

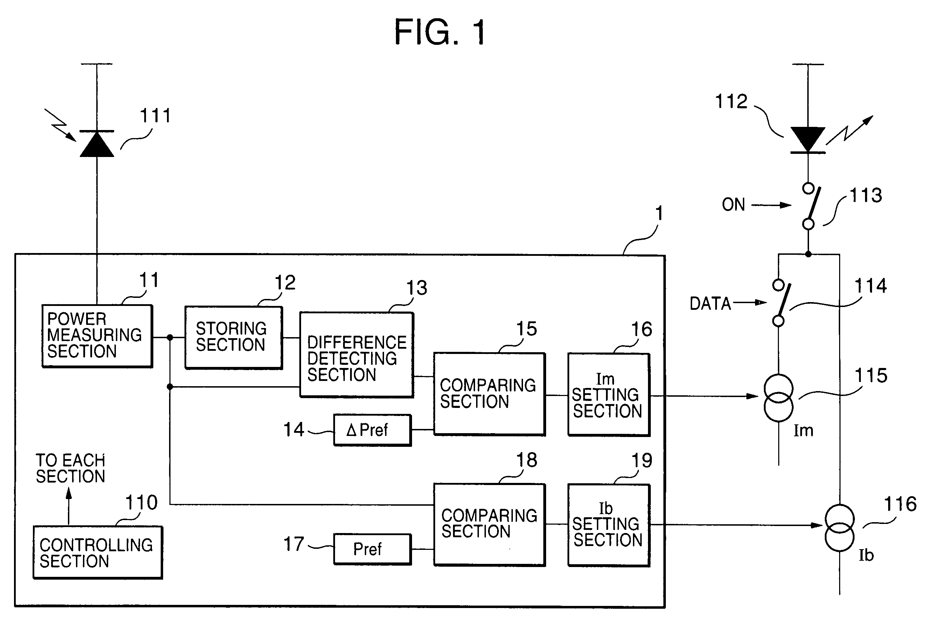

FIG. 1 is a block diagram showing an embodiment of a control circuit of the invention. In FIG. 1, in addition to a control circuit 1, a laser diode 112, a modulation current source 115, a bias current source 116, and a monitor photodiode 111 for converting section of light of the laser diode 112 to an electrical signal are shown. During burst output, a switch 113 becomes connected and a bias current Ib is always applied to the laser diode 112. During the burst, in the case that data is "L," only the current Ib is applied to the laser diode 112; meanwhile, in the case that data is "H," a switch 114 becomes connected, and currents Ib and Im are applied to the laser diode 112. As in the foregoing conventional example, descriptions of the pre-bias operation are omitted. Further, a mark ratio of burst data is herein set to 0.5.

The control circuit 1 in FIG. 1 has a power measuring section 11 for measuring power by a signal from the monitor photodiode 111; storing section 12 for memorizing the value measured at the power measuring section 11 as data; a defference detecting section 13 for detecting a difference between the value measured at the power measuring section 11 and a value previously memorized in the storing section 12; a ΔPref storage 14 wherein a reference value ΔPref is previously stored; a comparing section 15 for comparing an output signal of the defference detecting section 13 with the reference value ΔPref; a modulation current (Im) setting section 16 for setting a modulation current Im according to an output signal of the comparing section 15; a Pref storage 17 wherein a reference value Pref is previously stored; a comparing section 18 for comparing an output signal of the power measuring section 11 with the reference value Pref; a bias current (Ib) setting section 19 for setting the bias current Ib according to an output signal of the comparing section 18; and a controlling section 110 for controlling these respective sections.

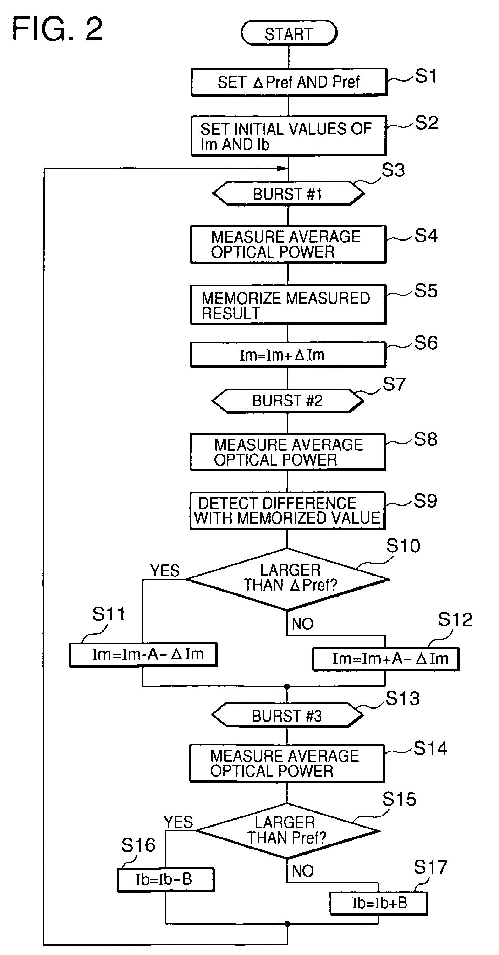

Descriptions will be given of operations of this control circuit with reference to FIGS. 1 and 2. After startup, the control circuit 1 sets the reference values ΔPref and Pref in the ΔPref storage 14 and the Pref storage 17 respectively. Subsequently, initial values of the modulation current Im and the bias current Ib are set in the modulation current setting section 16 and the bias current setting section 19 respectively. Details of these setting operations are omitted.

When a first burst #1 is transmitted, the power measuring section 11 measures average optical power of the burst based on a signal from the monitor photodiode 111. The result thereof is once memorized in the storing section 12. After that, the modulation current setting section 16 increases the modulation current, by, for example, a current ΔIm equivalent to 1% of the present modulation current Im. While a next burst #2 is transmitted, the power measuring section 11 measures average optical power of the burst. After that, the defference detecting section 13 detects a difference between the measured average optical power and a value previously memorized in the storing section 12. The comparing section 15 compares this difference with the reference value ΔPref. When the difference is larger than ΔPref, the modulation current setting section 16 decreases the modulation current Im by a specified amount A. On the contrary, when the difference is smaller than ΔPref, the modulation current setting section 16 increases the modulation current Im by the specified amount A.

In a next burst #3, an output of the power measuring section 11 is compared with the reference value Pref at the comparing section 18. When the measured power is larger than Pref, the bias current setting section 19 decreases the bias current Ib by a specified amount B. On the contrary, when the measured power is smaller than Pref, the bias current setting section 19 increases the bias current Ib by the specified amount B.

It is not necessary to perform these processes for the continuous bursts if these processes are frequent enough in relation to a rate of characteristics change of the laser diode. That is, it is possible that there are some bursts between any of the bursts #1, #2, and #3 that do not contribute to the control in FIG. 2.

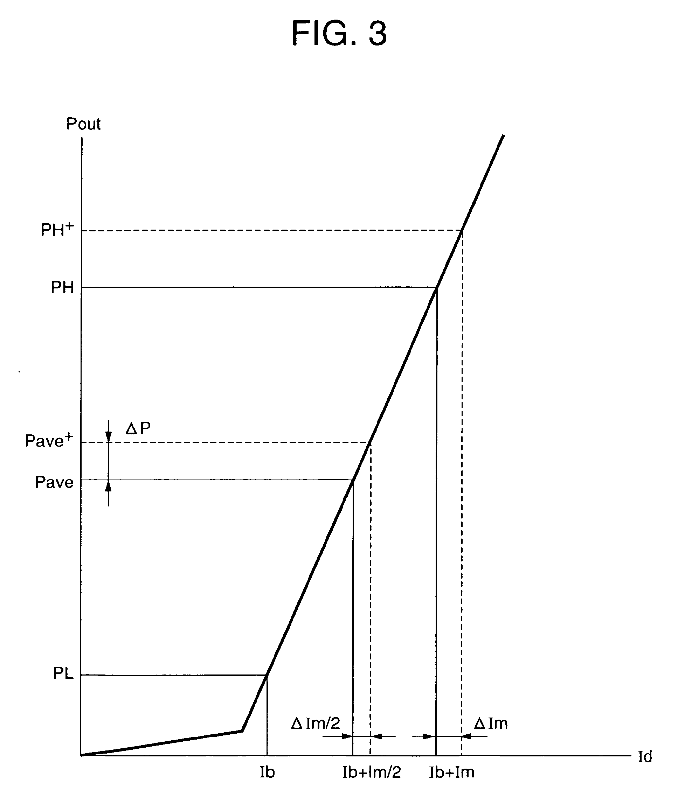

The reason why a constant extinction ratio can be obtained by the foregoing operations will be described by using FIG. 3. FIG. 3 shows characteristics of current Id versus optical output power Pout of the laser diode. When data is "L," it is formulized as follows:

$$Id=Ib$$

Then, optical output power is PL. When data is "H," it is formulized as follows:

$$Id=Ib+Im$$

Then, optical output power is PH. When a mark ratio is 0.5, it is formulized on average as follows:

$$Id=Ib+Im/2$$

Then, optical output power is Pave.

Here, when the modulation current is increased by $\Delta Im$, it is formulized on average as follows:

$$Id=Ib+(Im+/\Delta Im)/2$$

Then, optical output power is Pave+. An increment of the power then is set to $\Delta P$.

Based on the foregoing formulas, an extinction ratio ExR is obtained. Characteristics in a linear region of the laser diode can be regarded as a line. The formula thereof is expressed by

$$Pout=K \times Id + J$$

Then, as evidenced by FIG. 3, slope K is expressed by

$$K=\Delta P/(\Delta Im/2)$$

The average optical power is expressed by

$$Pave=K(Ib+(Im/2))+J$$

Further, it is formulized as follows:

$$PL=K \times Ib+J$$

$$PH=K(Ib+Im)+J$$

Therefore, it is formulized as follows:

$$ExR=PH/PL$$

$$= (Pave+ (\Delta P \cdot Im/\Delta Im)) / (Pave- (\Delta P \cdot Im/\Delta Im))$$

Here, where $\Delta Im$ is a value proportional to Im, that is, C x Im (C is a constant number), it is formulized as follows:

$$ExR=PH/PL$$

$$=(Pave+(\Delta P/C))/(Pave-(\Delta P/C))$$

It is understandable that the constant extinction ratio can be maintained if control is made so that the average optical power Pave and the fluctuating amount $\Delta P$ of the average optical power when the modulation current are changed become constant.

This control circuit can be realized by using separate sections. Further, the whole or a part of the control circuit can be realized by using an integrated circuit.

In the foregoing embodiment, descriptions have been given on the assumption that the respective sections operate under the control of the controlling section 110. However, it is also possible that these processes are performed by a software in the form that an output of the monitor photodiode 111 is AD-converted, which is taken into a CPU (central processing unit). A process flow in this case is as shown in FIG. 2. That is, in Step S1, reference values $\Delta Pref$ and Pref are respectively set. In Step S2, initial values of a modulation current Im and a bias current Ib are respectively set. Next, in Step S3, a first burst is transmitted. In Step S4, average optical power of the burst is measured based on a signal from the monitor photodiode 111. The result thereof is memorized in Step S5. After that, in Step S6, the modulation current is increased by, for example, a current $\Delta Im$ equivalent to 1% of the present modulation current Im. Next, in Step S7, a next burst is transmitted. In Step S8, average optical power of the burst is measured.

After that, in Step S9, a difference between the value previously memorized and the presently measured value is detected. In Step S10, this difference is compared with the reference value $\Delta Pref$. When the difference is larger than $\Delta Pref$, the modulation current Im is decreased by a specified amount A and $\Delta Im$ in Step S11. On the contrary, when the difference is smaller than $\Delta Pref$, the modulation current Im is increased by the specified amount A and decreased by $\Delta Im$ in Step S12. The reason why the modulation current Im is decreased by $\Delta m$ in Steps S11 and S12 is to recover the modulation current to an original value by decreasing the modulation current by $\Delta Im$ increased in Step S6. When Step S11 or Step S12 is finished, a burst is transmitted in Step S13. In Step S14, average optical power is measured.

The measured value is compared with the reference value Pref in Step S15. When the measured power is larger than Pref, a bias current Ib is decreased by a specified amount B in Step S16. On the contrary, when the measured power is smaller than Pref, the bias current Ib is increased by the specified amount B in Step S17.

After Step S16 or S17, the flow is returned to Step S3, and thereafter, Steps S3 to S16 or S17 are repeated. That is, Steps S3 to S11 or S12 and Steps S13 to S16 or S17 are executed alternately.

INDUSTRIAL APPLICABILITY

As described above, according to the invention, direct currents are sort of superimposed. Therefore, a transmission quality is not degraded. In the invention, a signal amplitude is slightly changed for each burst. However, since a receiver for burst generally performs gain control for each burst, this slight change of signal amplitude does not cause problems. Therefore, the invention can be utilized for a burst signal extinction ratio control circuit for controlling an extinction ratio of a laser diode used in optical transmission of digital data in packet communications and an integrated circuit thereof, a burst signal extinction ratio control method, a computer program, a laser diode drive circuit and the like.

**Claims**

1. A burst signal extinction ratio control circuit for supplying a control signal to a driving section for performing driving by supplying a laser diode with a bias current and a modulation current, comprising:

   a measurement means for measuring average optical power for each burst of the laser diode;
   a modulation current control means for controlling a modulation current Im of the laser diode based on the average optical power measured by the measurement means; and
   a bias current control means for controlling a bias current Ib of the laser diode based on the average optical power measured by the measurement means.

2. The burst signal extinction ratio control circuit according to claim 1, wherein the modulation current control means has a function having a means for increasing the modulation current Im by a specified value ΔIm.

3. The burst signal extinction ratio control circuit according to claim 2, wherein the specified value ΔIm is proportional to the modulation current Im.

4. The burst signal extinction ratio control circuit according to claim 1, wherein the modulation current control means comprises:

   a means for detecting a difference between average optical power P1 of burst #1 when the modulation current is Im and average optical power P2 of burst #2 when the modulation current is Im+ΔIm; and
   a means for decreasing the modulation current when a value of the difference is larger than a previously specified reference value ΔPref, and on the contrary, for increasing the modulation current when the value of the difference is smaller than the reference value ΔPref.

5. The burst signal extinction ratio control circuit according to claim 4, wherein an increasing or decreasing amount of the modulation current is set to a previously specified constant value A.

6. The burst signal extinction ratio control circuit according to claim 1, wherein the bias current control means comprises:

   a means for comparing average optical power P3 of burst #3 when the bias current is Ib with a previously specified reference value Pref; and
   a means for decreasing the bias current when the average optical power P3 is larger than the reference value Pref, and for increasing the bias current when the average optical power P3 is smaller than the reference value Pref based on the comparison.

7. The burst signal extinction ratio control circuit according to claim 6, wherein an increasing or decreasing amount of the bias current is set to a previously specified constant value B.

8. A burst signal extinction ratio control method for supplying a control signal to a driving section for performing driving by supplying a laser diode with a bias current and a modulation current, comprising:

   a measurement step for measuring average optical power for each burst of the laser diode;
   a modulation current control step for controlling a modulation current Im of the laser diode based on the average optical power measured by the measurement step; and
   a bias current control step for controlling a bias current Ib of the laser diode based on the average optical power measured by the measurement step.

9. The burst signal extinction ratio control method according to claim 8, comprising:

a modulation current control step comprising: a step for detecting a difference between average optical power P1 of burst #1 when the modulation current is Im and average optical power P2 of burst #2 when the modulation current is Im+ΔIm; and a step for decreasing the modulation current when a value of the difference is larger than a previously specified reference value ΔPref, and on the contrary, for increasing the modulation current when the value of the difference is smaller than the reference value ΔPref; and

a bias current control step comprising: a step for comparing average optical power P3 of burst #3 when the bias current is Ib with a previously specified reference value Pref; and a step for decreasing the bias current when the average optical power P3 is larger than the reference value Pref, and for increasing the bias current when the average optical power P3 is smaller than the reference value Pref based on the comparison, and further comprising:

a step for alternately executing the modulation current control step and the bias current control step.

10. A computer program for making a computer execute a burst signal extinction ratio control method for supplying a control signal to a driving section for performing driving by supplying a laser diode with a bias current and a modulation current, comprising:

a measurement step for measuring average optical power for each burst of the laser diode; a modulation current control step for controlling a modulation current Im of the laser diode based on the average optical power measured by the measurement step; and a bias current control step for controlling a bias current Ib of the laser diode based on the average optical power measured by the measurement step.

11. The computer program according to claim 10, comprising:

a modulation current control step comprising: a step for detecting a difference between average optical power P1 of burst #1 when the modulation current is Im and average optical power P2 of burst #2 when the modulation current is Im+ΔIm; and a step for decreasing the modulation current when a value of the difference is larger than a previously specified reference value ΔPref, and on the contrary, for increasing the modulation current when the value of the difference is smaller than the reference value ΔPref; and

a bias current control step comprising: a step for comparing average optical power P3 of burst #3 when the bias current is Ib with a previously specified reference value Pref; and a step for decreasing the bias current when the average optical power P3 is larger than the reference value Pref, and for increasing the bias current when the average optical power P3 is smaller than the reference value Pref based on the comparison, and further comprising:

a step for alternately executing the modulation current control step and the bias current control step.

12. A laser diode drive circuit, comprising:

a bias current source for supplying a laser diode with a bias current; a modulation current source for supplying the laser diode with a modulation current; a measurement means for measuring average optical power for each burst of the laser diode; a modulation current control means for controlling a modulation current Im of the laser diode based on the average optical power measured by the measurement means; and a bias current control means for controlling a bias current Ib of the laser diode based on the average optical power measured by the measurement means, wherein the average optical power and an extinction ratio of the laser diode become constant.

13. An integrated circuit mounting a burst signal extinction ratio control circuit for supplying a control signal to a driving section for performing driving by supplying a laser diode with a bias current and a modulation current, comprising:

a measurement means for measuring average optical power for each burst of the laser diode; a modulation current control means for controlling a modulation current Im of the laser diode based on the average optical power measured by the measurement means; and a bias current control means for controlling a bias current Ib of the laser diode based on the average optical power measured by the measurement means.

# FIG. 1

## FIG. 2

START

SET $\Delta$ Pref AND Pref —— S1

SET INITIAL VALUES OF Im AND Ib —— S2

BURST #1 —— S3

MEASURE AVERAGE OPTICAL POWER —— S4

MEMORIZE MEASURED RESULT —— S5

Im=Im+$\Delta$Im —— S6

BURST #2 —— S7

MEASURE AVERAGE OPTICAL POWER —— S8

DETECT DIFFERENCE WITH MEMORIZED VALUE —— S9

LARGER THAN $\Delta$Pref? —— S10

YES → S11: Im=Im-A-$\Delta$Im

NO → S12: Im=Im+A-$\Delta$Im

BURST #3 —— S13

MEASURE AVERAGE OPTICAL POWER —— S14

LARGER THAN Pref? —— S15

YES → S16: Ib=Ib-B

NO → S17: Ib=Ib+B

# FIG. 3

# FIG. 4

# FIG. 5
## PRIOR ART

EP 1 536 577 A1

# FIG. 6
## PRIOR ART

EP 1 536 577 A1

## INTERNATIONAL SEARCH REPORT

| | International application No. |
|---|---|
| | PCT/JP03/09171 |

**A. CLASSIFICATION OF SUBJECT MATTER**
    Int.Cl⁷ H04B10/04

According to International Patent Classification (IPC) or to both national classification and IPC

**B. FIELDS SEARCHED**

Minimum documentation searched (classification system followed by classification symbols)
    Int.Cl⁷ H04B10/00-10/28, H04J14/00-14/08

Documentation searched other than minimum documentation to the extent that such documents are included in the fields searched
    Jitsuyo Shinan Koho          1922-1996     Toroku Jitsuyo Shinan Koho     1994-2003
    Kokai Jitsuyo Shinan Koho    1971-2003     Jitsuyo Shinan Toroku Koho     1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-163555 A (NEC Corp.),<br>19 June, 1998 (19.06.98),<br>Full text; all drawings<br>(Family: none) | 1-13 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 August, 2003 (18.08.03) | 02 September, 2003 (02.09.03) |

| Name and mailing address of the ISA/ | Authorized officer |
|---|---|
| Japanese Patent Office | |
| Facsimile No. | Telephone No. |

Form PCT/ISA/210 (second sheet) (July 1998)